(19) Europäisches Patentamt
European Patent Office
Office européen des brevets

(11) **EP 2 947 748 B1**

(12) **EUROPEAN PATENT SPECIFICATION**

(45) Date of publication and mention
of the grant of the patent:
**18.04.2018 Bulletin 2018/16**

(51) Int Cl.:
**H02J 7/00** $^{(2006.01)}$ **H02J 7/04** $^{(2006.01)}$

(21) Application number: **15168490.9**

(22) Date of filing: **20.05.2015**

(54) **BATTERY CHARGING METHOD AND BATTERY MANAGEMENT SYSTEM THEREFOR**

BATTERIEAUFLADEVERFAHREN UND BATTERIEVERWALTUNGSSYSTEM DAFÜR

PROCÉDÉ DE CHARGE DE BATTERIE ET SON SYSTÈME DE GESTION DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2014 KR 20140060560**

(43) Date of publication of application:
**25.11.2015 Bulletin 2015/48**

(73) Proprietor: **Samsung SDI Co., Ltd.**
**Yongin-si, Gyeonggi-do 17084 (KR)**

(72) Inventors:
• **Baek, Ho-Yul**
**Gyeonggi-do (KR)**

• **Jang, Yoo-Hong**
**Gyeonggi-do (KR)**
• **Suh, Seung-Bum**
**Gyeonggi-do (KR)**
• **Cheong, Kyeong-Beom**
**Gyeonggi-do (KR)**

(74) Representative: **Taor, Simon Edward William et al**
**Venner Shipley LLP**
**200 Aldersgate**
**London EC1A 4HD (GB)**

(56) References cited:
**US-A1- 2006 093 894      US-A1- 2012 169 284**

**Description**

The present invention relates to a battery charging method and a battery management system therefor, and, more particularly, to a battery charging method and a battery management system therefor, which are capable of preventing the degradation of a battery and enabling the fast charging of the battery.

Recently, as technology for portable devices, such as portable computers, mobile phones or cameras, is developed and demand for the portable devices is increased, demand for secondary batteries as an energy source is increasing rapidly.

Since the secondary battery is rechargeable, it can be continuously used by recharging even though the battery has been discharged. Thus, the secondary battery varies in performance depending on the state of charge. Therefore, there are made efforts to improve a charging method and thereby enhance the performance of the secondary battery.

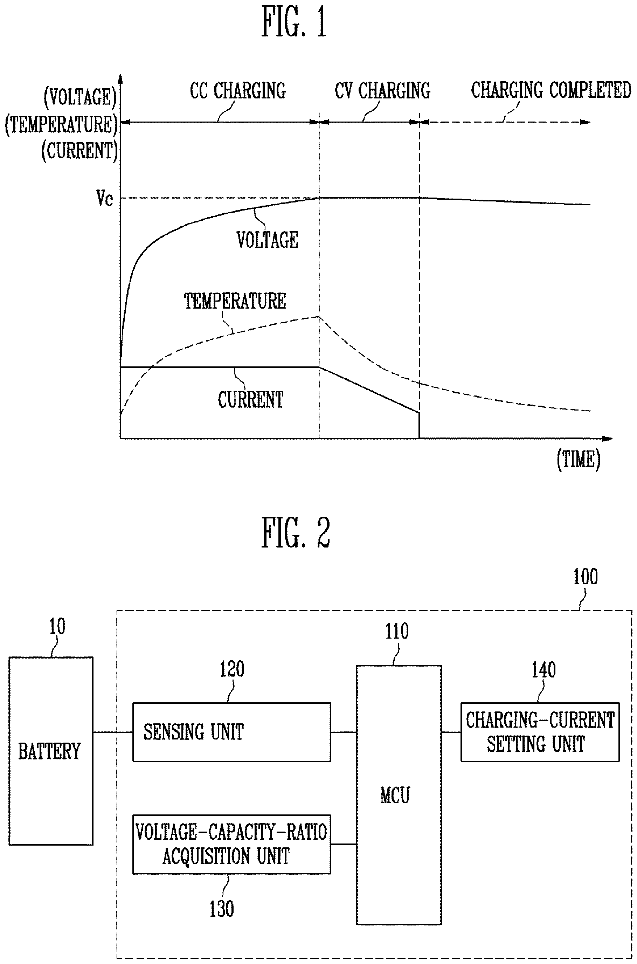

FIG. 1 is a view showing a constant current-constant voltage charging method (hereinafter, referred to as a CCCV method) that is one of conventional methods of charging the secondary battery. FIG. 1 shows changes in voltage and temperature when a charging operation is performed under the control of current as shown in the drawing. At an initial charging stage, first, constant current (CC) charging is performed. That is, assuming that a current value of the battery which requires one hour to change from a full charge state to a discharge state is a 1C-rate, charging is performed with the constant current of 0.5C-rate, for example. Until the voltage is increased by the charging operation to reach a preset voltage Vc, e.g. 4.2V, the CC charging is continued. When the voltage reaches the preset voltage Vc, the charging operation is switched to constant voltage (CV) charging. Thereby, the charging operation is performed while a CHARGING CURRENT is reduced, so as to maintain the preset voltage Vc.

In order to achieve fast charging in the CCCV charging method, the C-rate of the CC charging should be set to a large value. However, the higher the C-rate is, the more the heat dissipation of the secondary battery is. Further, the secondary battery is rapidly degraded. Consequently, the output and capacity of the secondary battery are undesirably reduced.

US2012169284 discloses a battery charging method in which constant-current charging is performed in a plurality of phases, and a magnitude of charge current with which a battery is charged is determined according to a charge amount of the battery. The charge amount may be determined by measuring the voltage of the battery or by integrating the charging current over time.
US2006093894 discloses a method for charging that includes charging a lithium-ion battery provided in a medical device, the lithium-ion battery having a negative electrode with a lithium titanate active material.

Accordingly, the present invention has been made keeping in mind the above problems occurring in the related art, and an aspect of the present invention is to provide a battery charging method and a battery management system therefor, which are capable of preventing the degradation of a battery and enabling the fast charging of the battery.

Other objects and aspects of the invention will become apparent from the following description of embodiments.

According to an aspect of the invention, there is provided a battery charging method as set out in claim 1. Preferred features of this aspect are set out in claims 2 to 10.

According to an aspect of the invention, there is provided a battery management system as set out in claim 11. Preferred features of this aspect are set out in claims 12 to 15.

As is apparent from the above description, the present invention is advantageous in that it is similar in degradation of the battery to conventional slow charging and reduces the charging time of the battery.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.

FIG. 1 is a view showing a CCCV charging method that is one of conventional secondary-battery charging methods;
FIG. 2 is a block diagram showing the configuration of a battery management system 100 according to an embodiment of the present invention;
FIG. 3 is a view showing obtained voltage capacity ratios for a plurality of C-rates according to an embodiment of the present invention;
FIG. 4 is a view showing a method in which CC charging is performed in each SOC section according to an embodiment of the present invention;
FIG. 5 is a view showing a method in which CCCV charging is performed in each SOC section according to an embodiment of the present invention;
FIG. 6 is a view showing a comparison between a capacity recovery rate when slow charging or fast charging is repeated and a capacity recovery rate when the charging method of the present invention is applied; and
FIG. 7 is a flowchart showing an entire process of a battery charging method according to an embodiment of the present invention.

Other embodiments of the invention will be described below in detail with reference to the accompanying drawings.

The above and other objects and features of the invention will be described more fully hereinafter with reference to the accompanying drawings, in which example embodiments of the inventions are shown. When the term "couple" or "connect" is used in the following description, it is intended to mean not only "directly coupled or connected to" but also "indirectly coupled or connected to" such as connected through another intervening element. Further, it should be understood that parts which are not related to the present invention are omitted in the drawings for clarity of

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.

FIG. 1 is a view showing a CCCV charging method that is one of conventional secondary-battery charging methods;

FIG. 2 is a block diagram showing the configuration of a battery management system 100 according to an embodiment of the present invention;

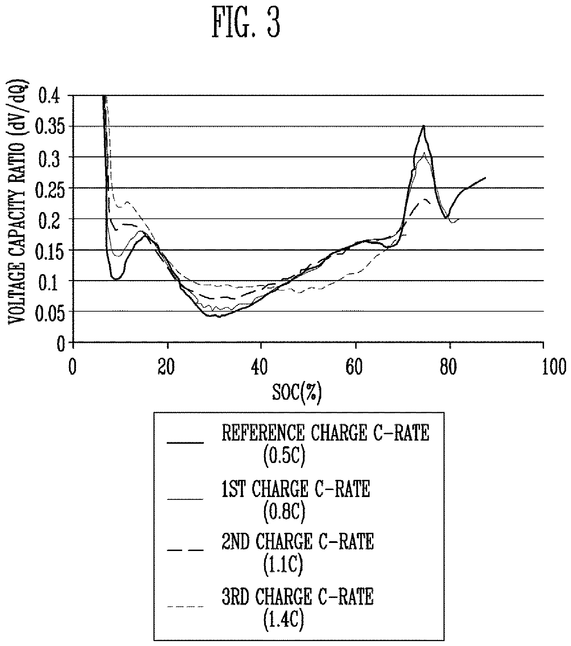

FIG. 3 is a view showing obtained voltage capacity ratios for a plurality of C-rates according to an embodiment of the present invention;

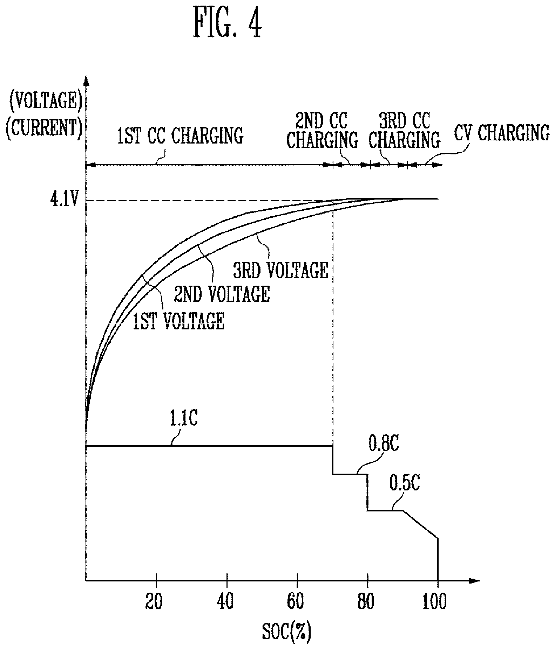

FIG. 4 is a view showing a method in which CC charging is performed in each SOC section according to an embodiment of the present invention;

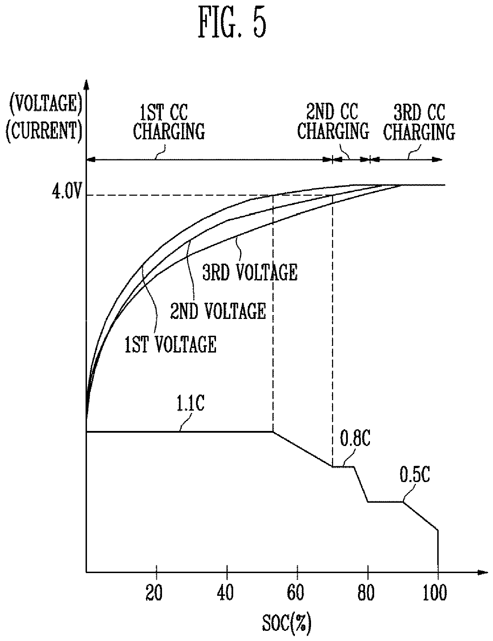

FIG. 5 is a view showing a method in which CCCV charging is performed in each SOC section according to an embodiment of the present invention;

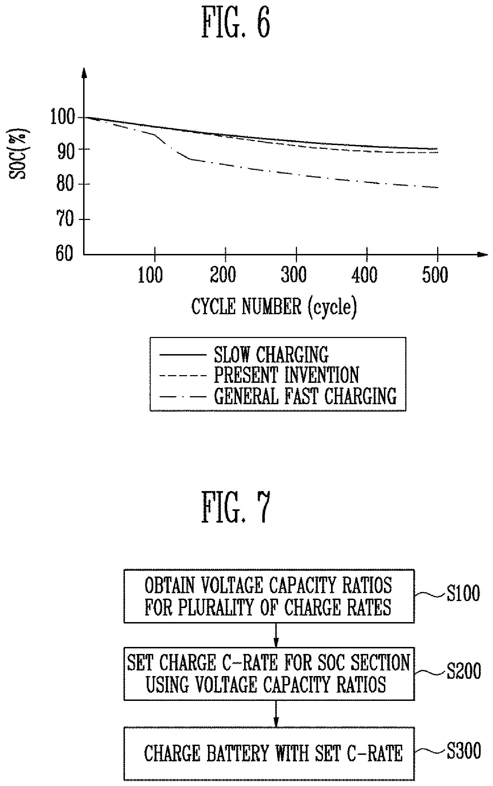

FIG. 6 is a view showing a comparison between a capacity recovery rate when slow charging or fast charging is repeated and a capacity recovery rate when the charging method of the present invention is applied; and

FIG. 7 is a flowchart showing an entire process of a battery charging method according to an embodiment of the present invention.

Other embodiments of the invention will be described below in detail with reference to the accompanying drawings.

The above and other objects and features of the invention will be described more fully hereinafter with reference to the accompanying drawings, in which example embodiments of the inventions are shown. While a preferred embodiment of the invention has been described using specific terms, such description is for illustrative purposes only, and it is to be understood that changes and variances may be made without departing from the scope of the following claims. When the term "couple" or "connect" is used in the following description, it is intended to mean not only "directly coupled or connected to" but also "indirectly coupled or connected to" such as connected through another intervening element. Further, it should be understood that parts which are not related to the present invention are omitted in the drawings for clarity of description. Like reference numerals are used to identify like elements throughout different drawings.

The present invention relates to a battery charging method and a battery management system therefor, which are capable of minimizing the degradation of a battery, namely, the reduction in capacity and output of the battery, and of performing the fast charging of the battery.

According to the present invention, in order to find conditions suitable for the fast charging, a ratio of a voltage variance to a capacity variance, namely, a voltage capacity ratio, depending on a change in SOC, is obtained for a plurality of C-rates. The voltage capacity ratio for a reference charge C-rate serving as the reference of slow charging is compared with voltage capacity ratios of the plurality of C-rates that are larger than the reference charge C-rate. Charge C-rates are set to minimize a difference in voltage capacity ratio for each SOC section. Then, the battery is charged with the charge C-rate that is set for each SOC section. Therefore, it is possible to maintain the performance that is similar to performance of the slow charging, and besides, to reduce a charging time.

An SOC section is a portion of the entire SOC values of the battery (i.e. 0% to 100%). Hence, the SOC can divided into, for example, a first SOC section (e.g. 0 to 15%), a second SOC section (e.g. 15 to 70%), a third SOC section (e.g.70 to 80%), and a fourth SOC section (e.g. 80 to 90%). These examples are, however, non-limiting and other values could be chosen. Hereinafter, the present invention will be described in detail with reference to the accompanying drawings.

FIG. 2 is a block diagram showing the configuration of a battery management system 100 according to an embodiment of the present invention.

Referring to FIG. 2, the battery management system 100 may include a micro control unit (MCU) 110, a sensing unit 120, a voltage-capacity-ratio acquisition unit 130, and a charge-current setting unit 140.

The MCU 110 serves to manage and control the entire charging and discharging of the battery 10.

The sensing unit 120 measures the output current and voltage of the battery 10 using a current sensor and a voltage sensor.

The voltage-capacity-ratio acquisition unit 130 obtains voltage capacity ratios of the reference charge C-rate for the slow charging and N (N is an integer of 1 or more) charge C-rates which are larger than the reference charge C-rate.

Here, the C-rate means a current rate, which is a unit for setting a current value and predicting or marking the available time of the battery under various conditions when the battery is charged or discharged. The current value depending on the C-rate is calculated by dividing the charging or discharging current by the rated capacity of the battery. The C-rate uses C in unit, and satisfies the following Equation 1.

$$[\text{Equation 1}]$$

$$\text{C-rate} = \text{charging and discharging current/rated capacity of battery}$$

The C-rate may be defined as a measure of the rate at which a battery is discharged relative to its maximum capacity, with a 1 C-rate meaning that the discharge current will discharge the entire battery in 1 hour.

The voltage capacity ratio for the charge C-rate may be defined as a value that is obtained by dividing a voltage variance depending on a change in state of charge (SOC) by a capacity variance depending on the change in SOC, and may be expressed as the following Equation 2.

$$[\text{Equation 2}]$$

$$\text{voltage capacity ratio} = dV/dQ$$

where dV denotes the voltage variance depending on the change in SOC, and dQ denotes the variance of capacity depending on the change in SOC.

The voltage-capacity-ratio acquisition unit 130 charges the battery with the reference charge C-rate for the slow charging, and then obtains the voltage capacity ratio data (e.g, a set of voltage capacity ratio values) for the reference charge C-rate. Here, the voltage-capacity-ratio acquisition unit 130 may obtain the voltage capacity ratio using a voltage and a current that are input from the sensing unit 120 while the battery is charged with the reference charge C-rate.

Subsequently, after the battery is discharged, the battery is charged with a first charge C-rate that is increased to be larger than the charge C-rate of a previous charging step by a preset value, thus obtaining the voltage capacity ratio for the first charge C-rate.

Thereafter, while the charging process is repeated with the discharge and charge C-rate increased, it is possible to obtain the voltage capacity ratio for each of preset N charge C-rates. Thus, among the N charge C-rates, a first charge C-rate is the smallest value and an Nth charge C-rate is the largest value.

Here, the discharging of the battery may be performed by the constant current-constant voltage (hereinafter, referred to as CCCV) discharging. The reason is as follows: if the discharge C-rate increases when the constant current (hereinafter, referred to as CC) discharging is performed, the battery rapidly reaches a cutoff voltage due to an increase in overvoltage, thus leading to a reduction in discharge capacity.

Since the voltage capacity ratios of the charge C-rates are based on the electrochemical properties of substances, a change in voltage capacity ratio means a change in properties of substances. That is, it may be assumed that, if the voltage capacity ratios for the different charge C-rates are similar to each other, the properties of the substances are likewise similar to each other. In other words, if the graph of voltage capacity ratio values against SOC for one C-rate is similar to the graph of voltage capacity ratio values against SOC for another C-rate, it can be assumed that the effect of these two C-rates is similar on the electrochemical properties of the battery. Thus, if the SOC is divided into a number of sections using similarity in voltage capacity ratio between the reference charge C-rate for the slow charging and the N charge C-rates for the fast charging and then the charge C-rate for the fast charging is set for each section, it is possible to perform the fast charging while undergoing degradation similar to that of the slow charging. In other words, in some embodiments of the invention it is possible to pick, for each SOC section the highest C-rate that has voltage capacity ratio values that are similar enough (e.g. within a predetermined range) to the to the voltage capacity ratio values of the reference C-rate.

FIG. 3 is a view showing voltage capacity ratios for a plurality of C-rates according to an embodiment of the present invention.

In FIG. 3, an X-axis designates an SOC%, while a Y-axis designates voltage capacity ratio values. FIG. 3 shows the voltage capacity ratios for the reference charge C-rate (0.5C), the first charge C-rate (0.8C), the second charge C-rate (1.1C), and the third charge C-rate (1.4C).

Referring to FIG. 3, it can be seen that the first and second charge rates are similar in voltage capacity ratio to the reference charge C-rate in a section where the SOC is 15 to 70%, and the first charge C-rate is similar in voltage capacity ratio to the reference charge C-rate in a section where the SOC is 70 to 80%.

FIG. 3 represents the voltage capacity ratio for the reference charge C-rate, until the SOC reaches 90%. The reason is as follows: after the SOC of the battery 10 has reached 90%, the CV charging is performed and thus the variance in voltage becomes o.

In this embodiment, in order to set the charge C-rate for each SOC section, the charge-current setting unit 140 compares the voltage capacity ratio values of the reference charge C-rate with the voltage capacity ratio values of the N charge C-rates, and then the charge C-rate for reducing a difference in voltage capacity ratio values for each SOC section is set among the N charge C-rates.

To be more specific, the charge-current setting unit 140 first selects an SOC section where a difference between the voltage capacity ratio of the reference charge C-rate and the voltage capacity ratio of the Nth charge C-rate having the largest value in the N charge C-rates is within a preset range, among the entire SOC sections of the battery, and then set the charge C-rate of the selected SOC section to the Nth charge rate, at step S10. In this context, the preset range is a value that may be set by a user in view of the characteristics of the battery.

Subsequently, among SOC sections other than the selected SOC section, the SOC section where a difference between the voltage capacity ratio of the reference charge C-rate and the voltage capacity ratio of an N-ith charge C-rate is within a preset range is selected and the charge C-rate of the selected SOC section is set to the N-ith charge C-rate, at step S20.

The charge-current setting unit 140 may repeatedly perform the step S20 for the N-2th charge C-rate to the first charge C-rate in the same manner, at step S30.

The above-mentioned process is performed as follows: the voltage capacity ratio of the Nth charge C-rate that is largest among the N charge C-rates and the voltage capacity ratio of the reference charge C-rate are first compared with each other, and then the voltage capacity ratios of the charge C-rates which are sequentially reduced are compared with the voltage capacity ratio of the reference charge C-rate. If there are a plurality of charge C-rates, having a difference in voltage capacity ratio within a preset range, in a specific SOC section, this is intended to set the largest charge C-rate for the fast charging to the charge C-rate of the specific SOC section.

Further, the charge-current setting unit 140 may set the charge C-rate of the SOC section where the charge C-rate is not set through the above-mentioned process, to the reference charge C-rate.

In other words, in some embodiments, for each SOC section, the highest C-rate is picked that has voltage capacity ratio values that are within the preset range to the to the voltage capacity ratio values of the reference C-rate.

In some embodiments of the invention, for each SOC section the highest C-rate is picked that has voltage capacity ratio values that are within a preset range to the to the voltage capacity ratio values of the reference C-rate. As a result of this, the damage to the battery is minimized.

Whether the voltage capacity ratio values are within the preset range could be determined in a number of ways. For example, the preset range could be based on a maximum allowed difference between the two sets of voltage capacity ratio values. In other embodiments, Alternatively, whether the voltage capacity ratio values that are within the preset range could be determined by considering an integral function comparing the area between two sets of values. However, embodiments of the invention are not limited to these examples.

Hereinafter, steps S10 to S30 will be described with reference to FIG. 3.

Referring to FIG. 3, first, the charge-current setting unit 140 determines whether there is present an SOC section where a difference between the voltage capacity ratio of the reference charge C-rate and the voltage capacity ratio of the third charge C-rate is within a preset range. It is assumed that FIG. 3 has no SOC section where the difference between the voltage capacity ratio of the reference charge C-rate and the voltage capacity ratio of the third charge C-rate is within the preset range. In other words, in this embodiment, the third charge C-rate produces voltage capacity ratio values that are too different to those of the reference charge C-rate (e.g. outside the preset or predetermined range).

Next, the charge-current setting unit 140 determines whether there is present the SOC section where the difference in voltage capacity ratio between the reference charge C-rate and the second charge C-rate is within the preset range. In FIG. 3, it is assumed that the section where the SOC is 15 to 70% is determined as the SOC section which is within the preset range. In this case, the charge-current setting unit 140 may set the charge C rate of the section where the SOC is 15 to 70%, to 1.1C.

In the initial section of FIG. 3 where the SOC is 0 to 15%, it can be seen that the voltage capacity ratio changes rapidly. This is due to an increase in overvoltage as the charge C-rate is applied to the battery 10. Thus, the charge C-rate of the initial section may be set not by comparing the voltage capacity ratios of the charge C-rates with each other but by using the charge C-rate which is set for the SOC section subsequent to the initial section. In other words, the charge C-rate of the initial section where the SOC is 0 to 15% may be set to 1.1C.

Next, the charge-current setting unit 140 determines whether there is present the SOC section where the difference in voltage capacity ratio between the reference charge C-rate and the first charge C-rate is within the preset range, among the SOC sections other than the section where the SOC is 15 to 70%. In FIG. 3, it is assumed that the SOC section ranging from 70 to 80% is determined as the SOC section which is within a preset range. In this case, the charge-current setting unit 140 may set, the charge C-rate of the SOC section ranging from 70 to 80%, to 0.8C.

The charge-current setting unit 140 may set the charge C-rate of the section where the charge C-rate is not set through the above-mentioned process, to the reference charge C-rate.

As such, the C-rate which is set for each SOC section by the charge-current setting unit 140 may be represented as in the following table 1.

Table 1

| SOC[%] | CHARGE C-RATE |
|---|---|
| 0 to 15 | 1.1C |
| 15 to 70 | 1.1C |
| 70 to 80 | 0.8C |
| 80 to 90 | 0.5C |

As shown in table 1, the MCU 110 performs control such that the battery 10 is charged with the charge C-rate that is set for each SOC section.

The MCU 110 may perform the CC charging or the CCCV charging for each SOC section.

If the charging of the battery 10 is performed by the CC charging, the first SOC section which is any one of the SOC sections may be charged by supplying the set charge C-rate to the first SOC section until the voltage of the battery 10 becomes the charge cutoff voltage which is set for the first SOC section.

Here, if the battery 10 is charged with the charge C-rate that is set for the first SOC section, the charge cutoff voltage set for the first SOC section may be a voltage when the SOC of the battery 10 becomes a final SOC of the first SOC section.

FIG. 4 is a view showing a method in which the CC charging is performed in each SOC section according to an embodiment of the present invention.

Referring to FIG. 4, in the first CC charging section where the SOC is 0 to 70%, the battery is charged with 1.1C. In the second CC charging section where the SOC is 70 to 80%, the battery is charged with 0.7C. In the third CC charging section where the SOC is 80 to 90%, the battery is charged with 0.5C.

In FIG. 4, a first voltage graph shows a change in voltage when the battery is charged with 1.1C, a second voltage graph shows a change in voltage when the battery is charged with 0.8C, and a third voltage graph shows a change in voltage when the battery is charged with 0.5C.

Referring to FIG. 4, the charge cutoff voltage in the section where the SOC is 0 to 70% may be 4.1V, namely, the voltage of the battery when the SOC of the battery 10 in the first voltage graph reaches 70% which is the final SOC of the first CC charging section.

That is, the charge C-rate of 1.1C is supplied to the battery 10 in the SOC section ranging from 0 to 70% until the voltage of the battery 10 reaches the charge cutoff voltage, so that the first CC charging is performed. Subsequently, in the next section, namely, the SOC section ranging from 70 to 80%, the charge C-rate of 0.8C is supplied to the battery 10, so that the second CC charging is performed.

If the charging of the battery 10 is performed by the CCCV charging, the CC charging is performed in the first SOC section which is one of the SOC sections by supplying the charge C-rate, set for the first SOC section, to the battery 10 until the voltage of the battery becomes the charge cutoff voltage set for the first SOC section. Then, the sequentially reduced charge C-rate is supplied to the battery 10 until the SOC of the battery becomes the final SOC of the first SOC section, so that the CV charging is performed.

Here, if the battery 10 is charged with the charge C-rate that is set for the second SOC section, namely, the section subsequent to the first SOC section, the charge cutoff voltage set for the first SOC section may be a voltage when the SOC of the battery 10 becomes the final SOC of the first SOC section.

Further, according to an embodiment of the present invention, the sequentially reduced charge C-rate may be reduced to a charge C-rate which is set for the SOC section subsequent to the first SOC section.

FIG. 5 is a view showing a method in which CCCV charging is performed in each SOC section according to an embodiment of the present invention.

Referring to FIG. 5, a first CCCV charging section is a section where the SOC is 0 to 70%, a second CCCV charging section is a section where the SOC is 70 to 80%, and a third CCCV charging section is a section where the SOC is 80 to 100%.

In FIG. 5, a first voltage graph represents a change in voltage when the battery is charged with 1.1C, a second voltage graph represents a change in voltage when the battery is charged with 0.8C, and a third voltage graph represents a change in voltage when the battery is charged with 0.5C.

Referring to FIG. 5, the first CCCV charging section is charged as follows: first, 1.1C is supplied to the battery 10 until the voltage of the battery reaches the charge cutoff voltage, so that the CC charging is performed. In this case, the charge cutoff voltage is 4.0V at which the SOC of the battery in the second voltage graph becomes 70% that is the final SOC of the first CCCV charging section.

Subsequently, the charge C-rate of 1.1C is sequentially reduced to the charge C-rate of 0.8C that is set for the second CCCV charging section, so that the CV charging is performed.

The CC charging performed in each SOC section is faster in charging speed than the CCCV charging, but is slightly faster in degradation speed of the battery 10 than the CCCV charging.

FIG. 6 is a view showing a comparison between a capacity recovery rate when slow charging or fast charging is repeated and a capacity recovery rate when the charging method of the present invention is applied.

Referring to FIG. 6, the slow charging and the charging method of the present invention show similar results: as the number of charging and discharging operations increases, the capacity recovery rate is reduced. However, it can be seen that the capacity recovery rate obtained when the fast charging is performed with the charge C-rate larger than that of the slow charging is rapidly reduced as the number of charging and discharging operations exceeds 150 times.

Herein, it is described that the slow charging is similar in capacity recovery rate to the charging method of the present invention. This means that electrochemical properties of the battery are similar in the slow charging and the fast charging using the present invention. Further, it can be seen that it is possible to use the battery for a lengthy period of time as in the slow charging even if the fast charging of the present invention is repeated.

Further, in the case of performing the slow charging, it took 142 minutes to reach the full charge state. Meanwhile, in the case of the charging method of the present invention, it took 95 minutes to complete the charging operation. In the case of the fast charging, it took 98 minutes to complete the charging operation. That is, it can be seen that the charging method of the present invention is similar in charging speed to the conventional fast charging.

FIG. 7 is a flowchart showing an entire process of a battery charging method according to an embodiment of the present invention.

First, the voltage capacity ratios are obtained, respectively, for the reference charge C-rate and the N (N is an integer of 1 or more) charge C-rates which are larger than the reference charge C-rate, at step S100.

Step S100 includes step S100-1 of charging the battery with the reference charge C-rate and then obtaining the voltage capacity ratio for the reference charge C-rate, and step S100-2 of discharging the battery, charging the battery with the first charge C-rate which is increased by a preset value as compared to the C-rate of the previous charging step, and then obtaining the voltage capacity ratio for the first charge C-rate. Step S100-2 may be repeated N times so as to obtain the voltage capacity ratios for the first to Nth charge C-rates.

Subsequently, the voltage capacity ratio of the reference charge C-rate is compared with the voltage capacity ratio of each of the N charge C-rates, and then the charge C-rate is set among the N charge C-rates such that a difference in voltage capacity ratio for each SOC section is minimized, at step S200.

To be more specific, step S200 includes step S200-1 of selecting an SOC section where a difference in voltage capacity ratio between the reference charge C-rate and the Nth charge C-rate is within a preset range, among all the SOC sections of the battery, and then setting the charge C-rate of the selected SOC section to the Nth charge C-rate, and step S200-2 of selecting an SOC section where a difference in voltage capacity ratio between the reference charge C-rate and the N-ith charge C-rate is within a preset range, out of the SOC sections of the battery excluding the selected SOC section, and then setting the charge C-rate of the selected SOC section to the N-ith charge C-rate. Step S200-2 may be repeated in the same manner for the N-2th to the first charge C-rate.

Finally, the battery 10 is charged with the charge C-rate that is set for each SOC section, at step S300.

According to an embodiment of the present invention, if the number of battery charging and discharging operations reaches a preset number, steps S100 to S200 may be performed again so as to reset the charge C-rate for each SOC section.

The reason is because the battery is degraded as the number of charging and discharging operations increases, so that a similarity in voltage capacity ratio between the charge C-rate which is first set for each SOC section and the reference charge C-rate may vary.

Embodiments of the invention can provide a battery charging method, comprising: (a) obtaining voltage capacity ratios values for a reference charge C-rate and N, where N is an integer of 1 or more, charge C-rates which are larger than the reference charge C-rate, the voltage capacity ratio values of a said C-rate being defined as a ratio of a voltage variance to a capacity variance depending on a change in state of charge, SOC, of a battery when the battery is charged with said C-rate; (b) comparing the voltage capacity ratio values of the reference charge C-rate with each of the voltage capacity ratios values of the N charge C-rates in a number of SOC sections, and then setting a charge C-rate for each SOC section from among the N charge C-rates so that a difference in voltage capacity ratio between the set charge C-rate and the reference charge C-rate is within a preset range for each of SOC sections; and (c) charging the battery with the charge C-rate that is set for each of the SOC sections. In this context, an SOC section can represent a range of SOC % values (e.g. 10 to 20% or 40 to 60%), as a result the full range of SOC % values may be split into SOC sections.

In some embodiments, the method comprises setting the charge C-rate for each SOC section by selecting the highest C-rate amount the N charge C-rates that has a difference in voltage capacity ratio values compared to the reference charge C-rate that is within the preset range.

In some embodiments, the method comprises (b-1) selecting an SOC section where a difference in voltage capacity ratio value between the reference charge C-rate and the Nth charge C-rate is within the preset range, among all SOC sections of the battery, and then setting a charge C-rate of the selected SOC section to the Nth charge C-rate; and (b-2) selecting an SOC section where a difference in voltage capacity ratio values between the reference charge C-rate and an N-ith charge C-rate is within the preset range, among the SOC sections other than the selected SOC section, and then setting a charge C-rate of the selected SOC section to the N-ith charge C-rate. It will be appreciated that (b-1) could be carried out for all SOC sections if all the SOC sections have voltage capacity ratio value differences within the preset range. For those SOC sections that are not set in (b-1), (b-2) can be carried out. (b-2) can then repeatedly performed for N-2th to first charge C-rates in the same manner so as to set the other (or a portion of the other) SOC sections. Any SOC sections where the voltage capacity ratio value differences fall outside the preset range may be set according to the reference charge C-rate.

Embodiments of the invention can also provide a battery management system, comprising: a voltage-capacity-ratio acquisition unit configured to obtain voltage capacity ratio values for a reference charge C-rate and N charge C-rates which are larger than the reference charge C-rate, wherein N is an integer of 1 or more, the voltage capacity ratio values being defined as a ratio of a voltage variance to a capacity variance depending on a change in SOC of a battery when the battery is charged with each of the C-rates; a charge-current setting unit configured to compare the voltage capacity ratio values of the reference charge C-rate with each of the voltage capacity ratio values of the N charge C-rates in a number of SOC sections, and then setting a charge C-rate for each SOC section from among the N charge C-rates so that a difference in voltage capacity ratio values is within a predetermined range for each of the SOC sections; and an MCU configured to perform control such that the battery is charged with the charge C-rate that is set for each of the SOC sections.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1. A battery charging method, comprising:

   (a) obtaining voltage capacity ratios values for a reference charge C-rate and N charge C-rates which are larger than the reference charge C-rate, wherein N is an integer of 1 or more, the voltage capacity ratio values of a said C-rate being defined as a ratio of a voltage variance to a capacity variance depending on a change in state of charge, SOC, of a battery when the battery is charged with said C-rate;
   (b) comparing the voltage capacity ratio values of the reference charge C-rate with each of the voltage capacity ratios values of the N charge C-rates in a number of SOC sections, and then setting a charge C-rate for each SOC section from among the N charge C-rates so that a difference in voltage capacity ratio values between the set charge C-rate and the reference charge C-rate is within a preset range for each of the SOC sections; and
   (c) charging the battery with the charge C-rate that is set for each of the SOC sections.

2. The battery charging method of claim 1, wherein the setting the charge C-rate for each SOC section comprises:

   selecting the highest C-rate amount the N charge C-rates that has a difference in voltage capacity ratio values compared to the reference charge C-rate that is within the preset range.

3. The battery charging method of claim 1 or 2, wherein (a) comprises:

   (a-1) charging the battery with the reference charge C-rate, and then obtaining the voltage capacity ratio values for the reference charge C-rate; and
   (a-2) discharging the battery and then charging the battery with a first charge C-rate that is larger than the C-rate of a previous charging step by a preset value, thus obtaining the voltage capacity ratio values for the first charge C-rate,

wherein (a-2) is repeated N times so as to obtain the voltage capacity ratio values for each of the first to Nth charge C-rates.

4. The battery charging method of claim 3, wherein the discharging of battery is performed by constant current-constant voltage, CCCV, discharging.

5. The battery charging method of claim 3 or 4, wherein (b) comprises:

(b-1) selecting an SOC section where a difference in voltage capacity ratio values between the reference charge C-rate and the Nth charge C-rate is within the preset range, among all SOC sections of the battery, and then setting a charge C-rate of the selected SOC section to the Nth charge C-rate; and
(b-2) selecting an SOC section where a difference in voltage capacity ratio values between the reference charge C-rate and an N-ith charge C-rate is within the preset range, among the SOC sections other than the selected SOC section, and then setting a charge C-rate of the selected SOC section to the N-ith charge C-rate,

wherein (b-2) is repeatedly performed for N-2th to first charge C-rates in the same manner; optionally wherein the charge C-rate of a section where any one of the N charge C-rates is not set, among all the SOC sections, is set to the reference charge C-rate.

6. The battery charging method of any one of claims 1 to 5, wherein, at (c), constant current, CC, charging or constant current-constant voltage, CCCV, charging is performed in each of the SOC sections using the charge C-rate that is set for that SOC section;
optionally wherein, when the battery charging is performed by the CC charging, a first SOC section is supplied with the charge C-rate set for the first SOC section and then is charged until the voltage of the battery reaches a charge cutoff voltage set for the first SOC section.

7. The battery charging method of claim 6, wherein, if the battery is charged with the C-rate set for the first SOC section, the charge cutoff voltage set for the first SOC section is a voltage when the SOC of the battery becomes a final SOC of the first SOC section.

8. The battery charging method of claim 6, wherein, if the battery charging is performed by the CCCV charging, the first SOC section undergoes the CC charging by supplying the charge C-rate set for the first SOC section until the voltage of the battery becomes the charge cutoff voltage set for the first SOC section, and undergoes the CV charging by supplying the charge C-rate that is sequentially reduced until the SOC of the battery becomes the final SOC of the first SOC section;
optionally wherein the charge cutoff voltage set for the first SOC section is a voltage when the SOC of the battery becomes the final SOC of the first SOC section, if the battery is charged with a C-rate set for a second SOC section that is a section subsequent to the first SOC section.

9. The battery charging method of claim 8, wherein the sequentially reduced charge C-rate is reduced to the charge C-rate set for the SOC section that is subsequent to the first SOC section.

10. The battery charging method of any one of claims 1 to 9, wherein, if the number of battery charging and discharging operations reaches a preset number, steps (a) and (b) are performed again, so that the charge C-rate is reset for each of the SOC sections.

11. A battery management system, comprising:

a voltage-capacity-ratio acquisition unit (130) configured to obtain voltage capacity ratio values for a reference charge C-rate and N charge C-rates which are larger than the reference charge C-rate, wherein N is an integer of 1 or more, the voltage capacity ratio values being defined as a ratio of a voltage variance to a capacity variance depending on a change in state of charge, SOC, of a battery when the battery is charged with each of the C-rates;
a charge-current setting unit (140) configured to compare the voltage capacity ratio values of the reference charge C-rate with each of the voltage capacity ratio values of the N charge C-rates in a number of SOC sections, and then setting a charge C-rate for each SOC section from among the N charge C-rates so that a difference in voltage capacity ratio values is within a predetermined range for each of the SOC sections; and
a micro control unit, MCU, (110) configured to perform control such that the battery is charged with the charge C-rate that is set for each of the SOC sections.

**12.** The battery management system of claim 11, further comprising:

a sensing unit (120) configured to sense a voltage and a current of the battery,
wherein the voltage-capacity-ratio acquisition unit is arranged to obtain the voltage capacity ratio values for the reference charge C-rate and the N charge C-rates using the voltage and the current that are sensed by the sensing unit.

**13.** The battery management system of claim 11 or 12, wherein the MCU is configured to perform constant current, CC, charging or constant current-constant voltage, CCCV, charging for each of the SOC sections, using the charge C-rate that is set for each of the SOC sections;
optionally wherein, when the battery charging is performed by the CC charging, the first SOC section undergoes the CC charging by supplying the charge C-rate set for the first SOC section until the voltage of the battery becomes a charge cutoff voltage set for the first SOC section;
further optionally wherein, if the battery is charged with the C-rate set for the first SOC section, the charge cutoff voltage set for the first SOC section is a voltage when the SOC of the battery becomes a final SOC of the first SOC section.

**14.** The battery management system of claim 13, wherein, if the battery charging is performed by the CCCV charging, the first SOC section undergoes the CC charging by supplying the charge C-rate set for the first SOC section until the voltage of the battery becomes the charge cutoff voltage set for the first SOC section, and undergoes the CV charging by supplying the charge C-rate that is sequentially reduced until the SOC of the battery becomes the final SOC of the first SOC section;
optionally wherein the charge cutoff voltage set for the first SOC section is a voltage when the SOC of the battery becomes the final SOC of the first SOC section, if the battery is charged with a C-rate set for a second SOC section that is a section subsequent to the first SOC section.

**15.** The battery management system of any one of claims 11 to 14, wherein the sequentially reduced charge C-rate is reduced to the charge C-rate set for the SOC section that is subsequent to the first SOC section.

**Patentansprüche**

**1.** Batterieaufladeverfahren, umfassend:

(a) Erhalten von Spannungs-/Kapazitätsverhältniswerten für eine Referenz-Lade-C-Rate und N Lade-C-Raten, die größer als die Referenz-Lade-C-Rate sind, wobei N eine ganze Zahl von 1 oder mehr ist, wobei die Spannungs-/Kapazitätsverhältniswerte der C-Rate definiert sind als ein Verhältnis einer Spannungsvarianz zu einer Kapazitätsvarianz in Abhängigkeit von einer Änderung des Ladezustands, State of Charge bzw. SOC, einer Batterie, wenn die Batterie mit der C-Rate geladen wird;
(b) Vergleichen der Spannungs-/Kapazitätsverhältniswerte der Referenz-Lade-C-Rate mit jedem der Spannungs-/Kapazitätsverhältniswerte der N Lade-C-Raten in einer Anzahl von SOC-Abschnitten und dann Einstellen einer Lade-C-Rate für jeden SOC-Abschnitt aus den N Lade-C-Raten, sodass eine Spannungs-/Kapazitätsverhältniswertedifferenz zwischen der eingestellten Lade-C-Rate und der Referenz-Lade-C-Rate für jeden der SOC-Abschnitte innerhalb eines voreingestellten Bereichs liegt; und
(c) Aufladen der Batterie mit der für jeden der SOC-Abschnitte eingestellten Lade-C-Rate.

**2.** Batterieaufladeverfahren nach Anspruch 1, wobei das Einstellen der Lade-C-Rate für jeden SOC-Abschnitt Folgendes umfasst:

Auswählen der höchsten C-Rate aus den N Lade-C-Raten, die eine Differenz der Spannungs-/Kapazitätsverhältniswerte im Vergleich zur Referenz-Lade-C-Rate aufweist, die innerhalb des voreingestellten Bereichs liegt.

**3.** Batterieaufladeverfahren nach Anspruch 1 oder 2, wobei (a) Folgendes umfasst:

(a-1) Aufladen der Batterie mit der Referenz-Lade-C-Rate und dann Erhalten der Spannungs-/Kapazitätsverhältniswerte für die Referenz-Lade-C-Rate und

(a-2) Entladen der Batterie und dann Aufladen der Batterie mit einer ersten Lade-C-Rate, die um einen voreingestellten Wert größer als die C-Rate eines vorherigen Aufladeschritts ist, dadurch Erhalten der Spannungs-/Kapazitätsverhältniswerte die für erste Lade-C-Rate,

wobei (a-2) N mal wiederholt wird, um die Spannungs-/Kapazitätsverhältniswerte für jede der ersten bis zur N-ten Lade-C-Rate zu erhalten.

4. Batterieaufladeverfahren nach Anspruch 3, wobei das Entladen der Batterie durch Konstantstrom-Konstantspannungs-, Constant Current-Constant-Voltage- bzw. CCCV-, Entladen ausgeführt wird.

5. Batterieaufladeverfahren nach Anspruch 3 oder 4, wobei (b) Folgendes umfasst:

(b-1) Auswählen eines SOC-Abschnitts, wo eine Spannungs-/Kapazitätsverhältniswertedifferenz zwischen der Referenz-Lade-C-Rate und der N-ten Lade-C-Rate innerhalb des voreingestellten Bereichs liegt, aus allen SOC-Abschnitten der Batterie und dann Einstellen einer Lade-C-Rate des ausgewählten SOC-Abschnitts auf die N-te Lade-C-Rate und

(b-2) Auswählen eines SOC-Abschnitts, wo eine Spannungs-/Kapazitätsverhältniswertedifferenz zwischen der Referenz-Lade-C-Rate und einer N-1-ten Lade-C-Rate innerhalb des voreingestellten Bereichs liegt, aus den anderen SOC-Abschnitten als dem ausgewählten SOC-Abschnitt und dann Einstellen einer Lade-C-Rate des ausgewählten SOC-Abschnitts auf die N-1-te Lade-C-Rate,

wobei (b-2) für N-2-te bis erste Lade-C-Raten in derselben Weise wiederholt ausgeführt wird; wobei optional die Lade-C-Rate eines Abschnitts, wo eine jegliche der N Lade-C-Raten nicht eingestellt ist, aus allen den SOC-Abschnitten auf die Referenz-Lade-C-Rate eingestellt wird.

6. Batterieaufladeverfahren nach einem der Ansprüche 1 bis 5, wobei bei (c) ein Konstantstrom-, Constant-Current- bzw. CC-, Aufladen oder ein Konstantstrom-Konstantspannungs-, Constant-Current-Constant-Voltage- bzw. CCCV-, Aufladen in jedem der SOC-Abschnitte unter Verwendung der für diesen SOC-Abschnitt eingestellten Lade-C-Rate ausgeführt wird;

wobei optional, wenn das Batterieaufladen durch das CC-Aufladen ausgeführt wird, ein erster SOC-Abschnitt mit der für den ersten SOC-Abschnitt eingestellten Lade-C-Rate versorgt und dann geladen wird, bis die Spannung der Batterie eine für den ersten SOC-Abschnitt eingestellte Ladeschlussspannung erreicht.

7. Batterieaufladeverfahren nach Anspruch 6, wobei, wenn die Batterie mit der für den ersten SOC-Abschnitt eingestellten C-Rate geladen wird, die für den ersten SOC-Abschnitt eingestellte Ladeschlussspannung eine Spannung ist, wenn der SOC der Batterie ein End-SOC des ersten SOC-Abschnitts wird.

8. Batterieaufladeverfahren nach Anspruch 6, wobei, wenn das Batterieaufladen durch das CCCV-Aufladen ausgeführt wird,

der erste SOC-Abschnitt das CC-Aufladen durch Bereitstellen der für den ersten SOC-Abschnitt eingestellten Lade-C-Rate durchläuft, bis die Spannung der Batterie die für den ersten SOC-Abschnitt eingestellte Ladeschlussspannung wird, und das CV-Aufladen durch Bereitstellen der Lade-C-Rate, die sequenziell reduziert wird, durchläuft, bis der SOC der Batterie der End-SOC des ersten SOC-Abschnitts wird;

wobei optional die für den ersten SOC-Abschnitt eingestellte Ladeschlussspannung eine Spannung ist, wenn der SOC der Batterie der End-SOC des ersten SOC-Abschnitts wird, wenn die Batterie mit einer für einen zweiten SOC-Abschnitt, der ein auf den ersten SOC-Abschnitt folgender Abschnitt ist, eingestellten C-Rate geladen wird.

9. Batterieaufladeverfahren nach Anspruch 8, wobei die sequenziell reduzierte Lade-C-Rate auf die Lade-C-Rate, die für den auf den ersten SOC-Abschnitt folgenden SOC-Abschnitt eingestellt ist, reduziert wird.

10. Batterieaufladeverfahren nach einem der Ansprüche 1 bis 9, wobei, wenn die Anzahl an Batterieauflade- und -entladevorgängen eine voreingestellte Anzahl erreicht, die Schritte (a) und (b) erneut ausgeführt werden, sodass die Lade-C-Rate für jeden der SOC-Abschnitte erneut eingestellt wird.

11. Batterieverwaltungssystem, umfassend:

eine Spannungs-/Kapazitätsverhältnis-Erfassungseinheit (130), die dazu gestaltet ist, Spannungs-/Kapazitätsverhältniswerte für eine Referenz-Lade-C-Rate und N Lade-C-Raten, die größer als die Referenz-Lade-C-Rate sind, zu erhalten, wobei N eine ganze Zahl von 1 oder mehr ist, wobei das Spannungs-/Kapazitätsverhältniswerte definiert sind als ein Verhältnis einer Spannungsvarianz zu einer Kapazitätsvarianz in Abhängigkeit von einer Änderung des Ladezustands, State Of Charge bzw. SOC, einer Batterie, wenn die Batterie mit jeder der C-Raten geladen wird;

eine Ladestrom-Einstelleinheit (140), die dazu gestaltet ist, die Spannungs-/Kapazitätsverhältniswerte der Referenz-Lade-C-Rate mit jedem der Spannungs-/Kapazitätsverhältniswerte der N Lade-C-Raten in einer Anzahl von SOC-Abschnitten zu vergleichen und dann eine Lade-C-Rate für jeden SOC-Abschnitt aus den N Lade-C-Raten so einzustellen, dass eine Spannungs-/Kapazitätsverhältniswertedifferenz für jeden der SOC-Abschnitte innerhalb eines vorbestimmten Bereichs liegt; und

eine Mikrosteuereinheit, Micro Control Unit bzw. MCU, (110), die dazu gestaltet ist, eine Steuerung so auszuführen, dass die Batterie mit der für jeden der SOC-Abschnitte eingestellten Lade-C-Rate geladen wird.

12. Batterieverwaltungssystem nach Anspruch 11, ferner umfassend:

eine Abtasteinheit (120), die dazu gestaltet ist, eine Spannung und einen Strom der Batterie abzutasten, wobei die Spannungs-/Kapazitätsverhältnis-Erfassungseinheit dazu angeordnet, die Spannungs-/Kapazitätsverhältniswerte für die Referenz-Lade-C-Rate und die N Lade-C-Raten unter Verwendung der bzw. des durch Abtasteinheit abgetasteten Spannung und Stroms zu erhalten.

13. Batterieverwaltungssystem nach Anspruch 11 oder 12, wobei die MCU dazu gestaltet ist, ein Konstantstrom-, Constant-Current- bzw. CC-, Aufladen oder ein Konstantstrom-Konstantspannungs-, Constant-Current-Constant-Voltage- bzw. CCCV-, Aufladen für jeden der SOC-Abschnitte unter Verwendung der für jeden der SOC-Abschnitte eingestellten Lade-C-Rate auszuführen;

wobei optional, wenn das Batterieaufladen durch das CC-Aufladen ausgeführt wird, der erste SOC-Abschnitt das CC-Aufladen durch Bereitstellen der für den ersten SOC-Abschnitt eingestellten Lade-C-Rate durchläuft, bis die Spannung der Batterie eine für den ersten SOC-Abschnitt eingestellte Ladeschlussspannung wird;

wobei ferner optional, wenn die Batterie mit der für den ersten SOC-Abschnitt eingestellten C-Rate geladen wird, die für den ersten SOC-Abschnitt eingestellte Ladeschlussspannung eine Spannung ist, wenn der SOC der Batterie ein End-SOC des ersten SOC-Abschnitts wird.

14. Batterieverwaltungssystem nach Anspruch 13, wobei, wenn das Batterieaufladen durch das CCCV-Aufladen ausgeführt wird,

der erste SOC-Abschnitt das CC-Aufladen durch Bereitstellen der für den ersten SOC-Abschnitt eingestellten Lade-C-Rate durchläuft, bis die Spannung der Batterie die für den ersten SOC-Abschnitt eingestellte Ladeschlussspannung wird, und das CV-Aufladen durch Bereitstellen der Lade-C-Rate, die sequenziell reduziert wird, durchläuft, bis der SOC der Batterie der End-SOC des ersten SOC-Abschnitts wird;

wobei optional die für den ersten SOC-Abschnitt eingestellte Ladeschlussspannung eine Spannung ist, wenn der SOC der Batterie der End-SOC des ersten SOC-Abschnitts wird, wenn die Batterie mit einer für einen zweiten SOC-Abschnitt, der ein auf den ersten SOC-Abschnitt folgender Abschnitt ist, eingestellten C-Rate geladen wird.

15. Batterieverwaltungssystem nach einem der Ansprüche 11 bis 14, wobei die sequenziell reduzierte Lade-C-Rate auf die Lade-C-Rate, die für den auf den ersten SOC-Abschnitt folgenden SOC-Abschnitt eingestellt ist, reduziert wird.

**Revendications**

1. Procédé de charge de batterie, comprenant les étapes suivantes :

(a) obtenir des valeurs de rapports tension-capacité pour un taux C de charge de référence et N taux C de charge qui sont supérieurs au taux C de charge de référence, où N est un entier supérieur ou égal à 1, les valeurs de rapports tension-capacité dudit taux C étant définies comme un rapport d'une variation de tension sur une variation de capacité en fonction d'un changement d'état de charge, SOC (*state of charge*), d'une batterie, lorsque la batterie est chargée selon ledit taux C ;

(b) comparer les valeurs de rapports tension-capacité du taux C de charge de référence avec chacune des valeurs de rapports tension-capacité des N taux C de charge dans un certain nombre de segments de SOC, puis régler un taux C de charge pour chaque segment de SOC parmi les N taux C de charge, de manière qu'une différence de valeurs de rapports tension-capacité entre le taux C de charge réglé et le taux C de charge de référence se situe à l'intérieur d'une plage prédéfinie pour chacun des segments de SOC ; et
(c) charger la batterie selon le taux C de charge qui est réglé pour chacun des segments de SOC.

2. Procédé de charge de batterie selon la revendication 1, dans lequel le réglage du taux C de charge pour chaque segment de SOC comprend les étapes suivantes :

sélectionner la grandeur de taux C la plus élevée les N taux C de charge, qui présente une différence de valeurs de rapports tension-capacité par comparaison avec le taux C de charge de référence, qui se situe à l'intérieur de la plage prédéfinie.

3. Procédé de charge de batterie selon la revendication 1 ou 2, dans lequel (a) comprend les étapes suivantes :

(a-1) charger la batterie selon le taux C de charge de référence, puis obtenir les valeurs de rapports tension-capacité pour le taux C de charge de référence ; et
(a-2) décharger la batterie, puis charger la batterie selon un premier taux C de charge qui dépasse le taux C d'une précédente étape de charge, d'une valeur prédéfinie, de façon à obtenir les valeurs de rapports tension-capacité pour le premier taux C de charge,

dans lequel (a-2) est répété N fois, de manière à obtenir les valeurs de rapports tension-capacité pour chacun des premier à $N^{\text{ième}}$ taux C de charge.

4. Procédé de charge de batterie selon la revendication 3, dans lequel la décharge de batterie est réalisée au moyen d'une décharge à courant constant-tension constante, CCCV (*constant current-constant voltage*).

5. Procédé de charge de batterie selon la revendication 3 ou 4, dans lequel (b) comprend les étapes suivantes :

(b-1) sélectionner un segment de SOC où une différence de valeurs de rapports tension-capacité entre le taux C de charge de référence et le $N^{\text{ième}}$ taux C de charge se situe à l'intérieur de la plage prédéfinie, parmi tous les segments de SOC de la batterie, puis régler un taux C de charge du segment de SOC sélectionné au $N^{\text{ième}}$ taux C de charge ; et
(b-2) sélectionner un segment de SOC où une différence de valeurs de rapports tension-capacité entre le taux C de charge de référence et un $N-1^{\text{ième}}$ taux C de charge se situe à l'intérieur de la plage prédéfinie, parmi les segments de SOC autres que le segment de SOC sélectionné, puis régler un taux C de charge du segment de SOC sélectionné au $N-1^{\text{ième}}$ taux C de charge,

dans lequel (b-2) est effectuée à plusieurs reprises pour les $N-2^{\text{ième}}$ à premier taux de charges C de la même manière ; éventuellement dans lequel le taux C de charge d'un segment où l'un quelconque des N taux C de charge n'est pas réglé, parmi tous les segments de SOC, est réglé au taux C de charge de référence.

6. Procédé de charge de batterie selon l'une quelconque des revendications 1 à 5, dans lequel, à (c), la charge à courant constant, CC ou la charge à courant constant-tension constante, CCCV, est réalisée dans chacun des segments de SOC, à l'aide du taux C de charge qui est réglé pour ce segment de SOC ;
éventuellement dans lequel, lorsque la charge de batterie est réalisée au moyen de la charge CC, un premier segment de SOC est alimenté selon le taux C de charge réglé pour le premier segment de SOC, puis est chargé jusqu'à ce que la tension de la batterie atteigne une tension de coupure de charge réglée pour le premier segment de SOC.

7. Procédé de charge de batterie selon la revendication 6, dans lequel, si la batterie est chargée selon le taux C réglé pour le premier segment de SOC, la tension de coupure de charge réglée pour le premier segment de SOC est une tension où le SOC de la batterie devient un SOC final du premier segment de SOC.

8. Procédé de charge de batterie selon la revendication 6, dans lequel, si la charge de batterie est réalisée au moyen de la charge CCCV,
le premier segment de SOC est soumis à la charge CC par apport du taux C de charge réglé pour le premier segment de SOC, jusqu'à ce que la tension de la batterie devienne égale à la tension de coupure de charge réglée pour le premier segment de SOC, et est soumis à la charge CV par apport du taux C de charge qui est réduit de manière séquentielle, jusqu'à ce le SOC de la batterie devienne le SOC final du premier segment de SOC ;

éventuellement dans lequel la tension de coupure de charge réglée pour le premier segment de SOC est une tension où le SOC de la batterie devient le SOC final du premier segment de SOC, si la batterie est chargée selon un taux C réglé pour un second segment de SOC, qui est un segment ultérieur au premier segment de SOC.

9. Procédé de charge de batterie selon la revendication 8, dans lequel le taux C de charge réduit de manière séquentielle est réduit au taux C de charge réglé pour le segment de SOC qui est ultérieur au premier segment de SOC.

10. Procédé de charge de batterie selon l'une quelconque des revendications 1 à 9, dans lequel, si le nombre d'opérations de charge et de décharge de batterie atteint un nombre prédéfini, les étapes (a) et (b) sont effectuées de nouveau, de manière que le taux C de charge soit de nouveau réglé pour chacun des segments de SOC.

11. Système de gestion de batterie, comprenant :

une unité d'acquisition de rapports tension-capacité (130) conçue pour obtenir des valeurs de rapports tension-capacité pour un taux C de charge de référence et N taux C de charge qui sont supérieurs au taux C de charge de référence, où N est un entier supérieur ou égal à 1, les valeurs de rapports tension-capacité étant définies comme un rapport d'une variation de tension sur une variation de capacité en fonction d'un changement d'état de charge, SOC, d'une batterie, lorsque la batterie est chargée selon chacun des taux C ;
une unité de réglage de courant de charge (140) conçue pour comparer les valeurs de rapports tension-capacité du taux C de charge de référence avec chacune des valeurs de rapports tension-capacité des N taux C de charge dans un certain nombre de segments de SOC, puis régler un taux C de charge pour chaque segment de SOC parmi les N taux C de charge, de manière qu'une différence de valeurs de rapports tension-capacité se situe à l'intérieur d'une plage prédéterminée pour chacun des segments de SOC ; et
une unité de microrégulation, MCU (*micro control unit*) (110), conçue pour effectuer une régulation de manière que la batterie soit chargée selon le taux C de charge qui est réglé pour chacun des segments de SOC.

12. Système de gestion de batterie selon la revendication 11, comprenant en outre :

une unité de détection (120) conçue pour détecter une tension et un courant de la batterie,
dans lequel l'unité d'acquisition de rapports tension-capacité est destinée à obtenir les valeurs de rapports tension-capacité pour le taux C de charge de référence et les N taux C de charge, à l'aide de la tension et du courant qui sont détectés par l'unité de détection.

13. Système de gestion de batterie selon la revendication 11 ou 12, dans lequel l'unité MCU est conçue pour réaliser la charge à courant constant, CC, ou la charge à courant constant-tension constante, CCCV, pour chacun des segments de SOC, à l'aide du taux C de charge qui est réglé pour chacun des segments de SOC ;
éventuellement dans lequel, lorsque la charge de batterie est réalisée au moyen de la charge CC, le premier segment de SOC est soumis à une charge CC par apport du taux C de charge réglé pour le premier segment de SOC, jusqu'à ce que la tension de la batterie devienne égale à une tension de coupure de charge réglée pour le premier segment de SOC ;
éventuellement en outre, dans lequel, si la batterie est chargée selon le taux C réglé pour le premier segment de SOC, la tension de coupure de charge réglée pour le premier segment de SOC est une tension où le SOC de la batterie devient un SOC final du premier segment de SOC.

14. Système de gestion de batterie selon la revendication 13, dans lequel si la charge de batterie est réalisée au moyen de la charge CCCV,
le premier segment de SOC est soumis à la charge CC par apport du taux C de charge réglé pour le premier segment de SOC, jusqu'à ce que la tension de la batterie devienne égale à la tension de coupure de charge réglée pour le premier segment de SOC, et est soumis à la charge CV par apport du taux C de charge qui est réduit de manière séquentielle, jusqu'à ce le SOC de la batterie devienne le SOC final du premier segment de SOC ;
éventuellement dans lequel la tension de coupure de charge réglée pour le premier segment de SOC est une tension où le SOC de la batterie devient le SOC final du premier segment de SOC, si la batterie est chargée selon un taux C réglé pour un second segment de SOC, qui est un segment ultérieur au premier segment de SOC.

15. Système de gestion de batterie selon l'une quelconque des revendications 11 à 14, dans lequel le taux C de charge réduit de manière séquentielle est réduit au taux C de charge réglé pour le segment de SOC qui est ultérieur au premier segment de SOC.

# FIG. 1

| | CC CHARGING | CV CHARGING | CHARGING COMPLETED |

(VOLTAGE)
(TEMPERATURE)
(CURRENT)

Vc

VOLTAGE

TEMPERATURE

CURRENT

(TIME)

# FIG. 2

100

10 — BATTERY

120 — SENSING UNIT

130 — VOLTAGE-CAPACITY-RATIO ACQUISITION UNIT

110 — MCU

140 — CHARGING-CURRENT SETTING UNIT

# FIG. 3

| | REFERENCE CHARGE C-RATE (0.5C) |
| --- | --- |
| | 1ST CHARGE C-RATE (0.8C) |
| | 2ND CHARGE C-RATE (1.1C) |
| | 3RD CHARGE C-RATE (1.4C) |

# FIG. 4

# FIG. 5

# FIG. 6

SLOW CHARGING
PRESENT INVENTION
GENERAL FAST CHARGING

# FIG. 7

| OBTAIN VOLTAGE CAPACITY RATIOS FOR PLURALITY OF CHARGE RATES | S100 |
| SET CHARGE C-RATE FOR SOC SECTION USING VOLTAGE CAPACITY RATIOS | S200 |
| CHARGE BATTERY WITH SET C-RATE | S300 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012169284 A
- US 2006093894 A